**Europäisches Patentamt**

**European Patent Office**

**Office européen des brevets**

(11) Veröffentlichungsnummer: **0 060 515**
A1

# (12) EUROPÄISCHE PATENTANMELDUNG

(21) Anmeldenummer: **82101935.3**

(22) Anmeldetag: **11.03.82**

(51) Int. Cl.³: **A 01 K 63/00**

(30) Priorität: **17.03.81 DE 3110236**

(43) Veröffentlichungstag der Anmeldung: **22.09.82**
**Patentblatt 82/38**

(84) Benannte Vertragsstaaten: **AT BE CH FR GB IT LI NL SE**

(71) Anmelder: **Reck, Eckhard, Berenbrock 2, D-4782 Erwitte (DE)**

(72) Erfinder: **Reck, Eckhard, Berenbrock 2, D-4782 Erwitte (DE)**

(74) Vertreter: **Patentanwälte Meinke und Dabringhaus Dipl.-Ing. J. Meinke Dipl.-Ing. W. Dabringhaus, Westenhellweg 67, D-4600 Dortmund 1 (DE)**

(54) **Verfahren zur Wiederverwertung der Scheiben von Schrottfahrzeugen und nach dem Verfahren hergestellter Behälter.**

(57) Die Erfindung richtet sich auf ein Verfahren zur Wiederverwertung von Scheiben von Schrottfahrzeugen sowie einem insbesondere nach dem Verfahren hergestellten Behälter (1) zur Aufnahme von Pflanzen und/oder Tieren mit die Einsicht in das Behälterinnere ermöglichenden Seitenwänden (3-6), dabei sollen die Scheiben einer neuen Verwendung zugeführt, ein diese Verwendung ermöglichendes Verfahren angegeben und ein nach dem Verfahren hergestelltes Produkt geschaffen werden. Dies wird dadurch zum einen erreicht, dass die Scheiben aus den Fahrzeugen ausgebaut und anschliessend wasserdicht in Rahmen gefasst und dann zu Behältern zur Aufnahme von Pflanzen und/oder Tieren, wie z.B. Aquarien, Terrarien od. dgl. zusammengebaut werden, sowie dadurch, dass die Seitenwände (3-6) von Scheiben (8-15) ausgedienter Fahrzeuge gebildet sind.

"Verfahren zur Wiederverwertung der Scheiben von Schrottfahrzeugen und nach dem Verfahren hergestellter Behälter"

Die Erfindung richtet sich auf ein Verfahren zur Wiederverwertung von Scheiben von Schrottfahrzeugen sowie einem insbesondere nach dem Verfahren hergestellten Behälter zur Aufnahme von Pflanzen und/oder Tieren mit die Einsicht in das Behälterinnere ermöglichenden Seitenwänden.

Man ist seit langem bemüht, diejenigen Industriegüter oder die Teile von Industriegütern einer besonderen nachfolgenden Verwendung wieder zuzuführen, die unbrauchbar geworden sind oder den technischen Anforderungen, die an sie gestellt werden, nicht mehr gerecht werden können. So ist es z.B. bekannt, die Metallteile von Schrottfahrzeugen der Schrottverwertung zuzuführen, wobei die Eisenteile, die Bundmetallteile u. dgl. getrennt und einzelnen besonderen Wiederaufbereitungsverfahren zugänglich gemacht werden.

Beim Ausschlachten von Schrottfahrzeugen bleiben in der Regel die Scheiben übrig, so daß es Aufgabe der Erfindung ist, diese Scheiben einer neuen Verwendung zuzuführen, dabei ein Verfahren anzugeben, welches die Wiederverwendung der Scheiben ermöglicht sowie ein nach dem Verfahren hergestelltes Produkt zu schaffen.

Mit einem Verfahren der eingangs bezeichneten Art wird diese Aufgabe gemäß der Erfindung dadurch gelöst, daß die Scheiben aus den Fahrzeugen ausgebaut und anschliessend wasserdicht in Rahmen gefaßt und dann zu Behältern zur Aufnahme von Pflanzen und/oder Tieren, wie z.B. Aquarien, Terrarien o. dgl., zusammengebaut werden.

Mit dem erfindungsgemäßen Verfahren ist es möglich, diese bei der Wiederverwertung von Schrottfahrzeugen anfallenden Scheiben einem gänzlich anderen Zweck zuzuführen, was sich insbesondere deswegen als vorteilhaft herausgestellt hat, weil zum einen die Scheiben eine sehr hohe Qualität aufweisen und zum anderen unregelmäßig geformt und gewölbt sind, so daß mit dem Zusammenfügen mehrerer solcher Scheiben sehr unregelmäßig und künstlerisch gestaltbare Behälter geschaffen werden können.

Es ist z.B. möglich, aus dem Satz eines einzigen Fahrzeuges nach dem erfindungsgemäßen Verfahren einen entsprechenden Behälter zu schaffen, diesen zu Werbe- oder sonstigen Zwecken heranzuziehen und dabei die Strukturen des ursprünglich mit diesen Scheiben ausgestatteten Fahrzeuges beizubehalten.

Nach der Erfindung kann auch vorgesehen sein, daß die Scheiben in einem gemeinsamen Tragkörper aus Kunststoff als Rahmen randseitig wasserdicht eingegossen werden.

Es besteht grundsätzlich die Möglichkeit, die Scheiben so in einzelnen Rahmen zu fassen, daß sie z.B. zu Behältern mit rechteckigen, trapezoiden, polygonalen oder anderen aus Geraden gebildeten Flächen zusammensetzbar sind. Diese Verfahrensvariante ermöglicht aber auch die Bildung von Behältern mit unregelmäßigen Grundflächen als Halbkugeln o. dgl.

Nach der Erfindung wird die Aufgabe bei einem Behälter der eingangs bezeichneten Art dadurch gelöst, daß die Seitenwände von Scheiben ausgedienter Fahrzeuge bzw. Schrottfahrzeugen gebildet sind, wobei die Erfindung auch vorsieht, daß die Scheiben in einem gemeinsamen Traggerüst als Rahmen eingebaut und flüssigkeitsdicht miteinander verbunden sind.

In Ausgestaltung kann nach der Erfindung vorgesehen sein, daß wenigstens ein Teil der Scheiben zum Behälterinneren und/oder zum Behälteräußeren hin gewölbt in einem gemeinsamen Rahmen angeordnet ist. Durch diese Gestaltung lassen sich sehr vielfach ästhetische Effekte mit technischen Mitteln erreichen, wobei jeweils bei dem Zusammenbau sich die z.B.  den Frontscheiben von PKW's innewohnende Krümmung ausgenutzt wird.

In weiterer Ausgestaltung kann nach der Erfindung auch vorgesehen sein, daß wenigstens eine Behälterseitenfläche von einer Mehrzahl von Fahrzeugscheiben und/oder auch der Behälterboden aus einer Fahrzeugscheibe gebildet ist.

Vielfach sind Abdeckungen derartiger Behälter notwendig, um z.B. eine Treibhausatmosphäre im Inneren des Behälters zu schaffen, wenn sich darin z.B. exotische Pflanzen und Tiere befinden sollten. Aus diesem Grund ist nach der Erfindung auch vorgesehen, daß der Behälter mit einer Abdeckkung versehen ist, die selbst wiederum aus wenigstens einer Fahrzeugscheibe gebildet ist.

Für die erfindungsgemäßen Behälter gibt es eine Vielzahl von Anwendungsmöglichkeiten. Z.B. als repräsentative Schauobjekte in Eingangshallen von Verwaltungsgebäuden, Sparkassen, Schulen o. dgl. Es sind aber auch derartige Behälter als alternative Aufbewahrungsmittel in zoologischen Gärten einsetzbar oder in Privathaushalten für Tiere und Pflanzen.

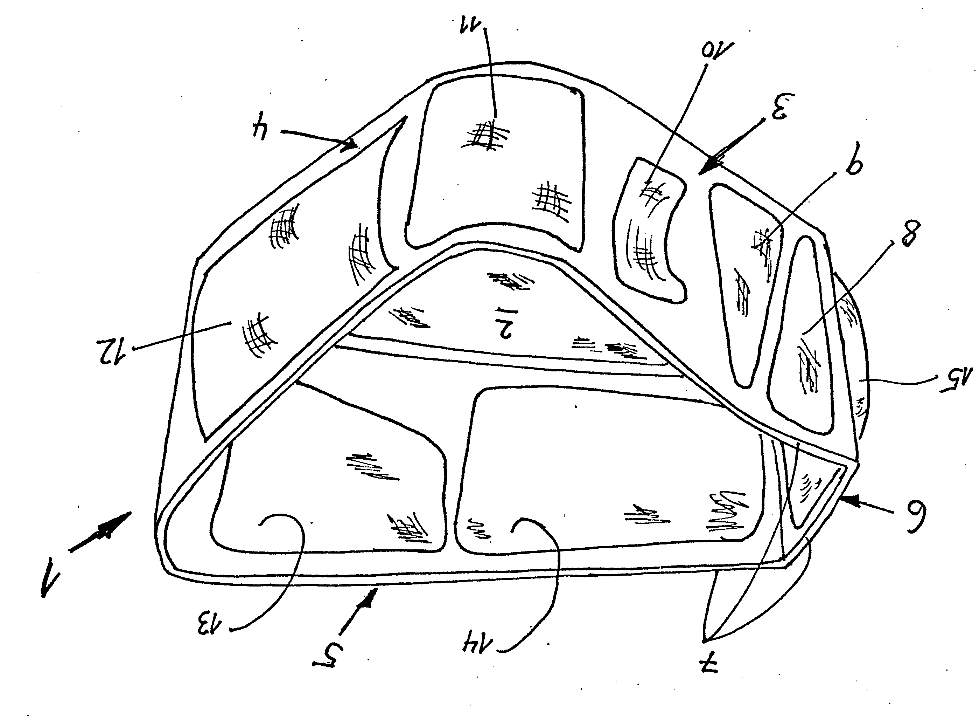

Die Erfindung ist nachstehend anhand der Zeichnung beispielsweise näher erläutert, die in der einzigen Figur ein Beispiel eines Behälters nach der Erfindung zeigt.

Der allgemein mit 1 bezeichnete Behälter hat im dargestellten Beispiel einen unregelmäßig geformten Behälterboden 2, der z.B. von dem Teil einer Omnibus-Frontscheibe gebildet sein kann. Die Seitenwände sind zur leichteren Identifizierung mit den Bezugsziffern 3-6 bezeichnet, wobei z.B. die Seitenwände 3, 4 und 5 jeweils fließend, d.h. ohne Bildung einer scharfen Kante,ineinander übergehen, während der Übergang von der Seitenwand

5 zur Seitenwand 6 einerseits und der Seitenwand 6 zur Seitenwand 3 andererseits im dargestellten Beispiel scharfkantig ausgeführt ist.

In den Seitenwänden sind in einem gemeinsamen Kunststoffrahmen, der mit 7 bezeichnet ist, Scheiben 8 - 15 von ausgedienten Fahrzeugen flüssigkeitsdicht eingegossen. Um die Vielfalt der Möglichkeiten darzustellen, sind die Scheiben 8 - 15 im dargestellten Beispiel jeweils anders gestaltet :

Die Scheibe 8 ist im wesentlichen ebenso wie die Scheibe 9 dreieckförmig und kann z.B. von den rückwärtigen Seitenscheiben eines PKW's mit nur zwei Türen gebildet werden.

Die Scheibe 10 ist zum Behälterinneren hin gewölbt ausgebildet. Es kann sich hierbei z.B. um den Windabweiser eines verkleideten Motorrades handeln. Die Scheibe 11 bildet die Überbrückung von der Seitenwand 3 zur Seitenwand 4. Hierbei kann es sich z.B. um den hochkant gestellten Teil der Frontscheibe eines Busses handeln, während die Scheibe 12 eine gesamte Busfrontscheibe darstellen kann.

Die Scheibe 13 kann Ausschnitte einer vergleichsweise geraden Seitenscheibe eines LKW's oder eines PKW's darstellen, während die Scheibe 14 die Frontscheibe eines PKW's bilden kann. Schließlich ist die Scheibe 15 im dargestellten Beispiel zum Behälteräußeren gewölbt im Rahmen 7 eingegossen. Hierbei könnte es sich z.B. um die klarsichtige Lichtkuppel eines Wohnmobiles o. dgl. handeln.

Ein ebenfalls aus Scheiben gebildeter Deckel kann den Behälter 1 verschließen, was jedoch in der Figur nicht näher dargestellt ist.

Der Kunststoffrahmen 7 kann z.B. selbst aus klarsichtigem Kunststoff gebildet sein, so daß sich ein gesamtes transparentes Gebilde ergibt, wobei durch die unterschiedlichen Brechungsindizes zwischen Kunststoff und Scheiben ein wechselhaftes Farbenspiel im Inneren des Behälters erreichen läßt, wenn z.B. das Behälterinnere farbig beleuchtet ist. Der Kunststoffrahmen 7 kann aber auch dadurch gebildet sein, daß die Scheiben einzeln wasserdicht z.B. in U-Profilen aus Metall gefaßt sind, wobei diese U-Profile in einem weiteren Profilgerüst wasserdicht gehalten sind, was nicht näher dargestellt ist.

Natürlich ist das beschriebene Ausführungsbeispiel noch in vielfacher Hinsicht abzuändern, ohne den Grundgedanken der Erfindung zu verlassen. So kann z.B. ein Wechsel zwischen getönten und nicht getönten Scheiben vorgenommen werden. Aus großen Frontscheiben können Flachbecken ohne direkte Seitenwände gebildet werden, die z.B. mit einer entsprechenden weiteren großflächig gewölbten

- 7 -

0060515

Scheibe zusammen etwa in Art einer Muschel ein großes Terrari-umbecken mit Haube bilden können u. dgl. mehr.

0060515

Patentansprüche :

1. Verfahren zur Wiederverwertung der Scheiben von Schrottfahrzeugen, dadurch gekennzeichnet, daß die Scheiben aus den Fahrzeugen ausgebaut und anschließend wasserdicht in Rahmen gefaßt und dann zu Behältern zur Aufnahme von Pflanzen und/oder Tieren, wie z.B. Aquarien, Terrarien, o. dgl. zusammengebaut werden.

2. Verfahren nach Anspruch 1, dadurch gekennzeichnet, daß die Scheiben in einem gemeinsamen Tragkörper aus Kunststoff als Rahmen randseitig wasserdicht eingegossen werden.

3. Behälter zur Aufnahme von Pflanzen und/oder Tieren mit die Einsicht in das Behälterinnere ermöglichenden Seitenwänden, dadurch gekennzeichnet, daß die Seitenwände (3-6) von Scheiben (8-15) ausgedienter FAhrzeuge gebildet sind.

4. Behälter nach Anspruch 3, dadurch gekennzeichnet, daß die Scheiben (8-15) in einem gemeinsamen Traggerüst als Rahmen (7) eingebaut und flüssigkeitsdicht miteinander verbunden sind.

5. Behälter nach Anspruch 3 oder 4, dadurch gekennzeichnet, daß wenigstens ein Teil der Scheiben (10) zum Behälter-

0060515

inneren hin gewölbt in einem gemeinsamen Rahmen (7) angeordnet ist.

6. Behälter nach einem der vorangehenden Ansprüche, dadurch gekennzeichnet, daß wenigstens ein Teil der Scheiben (12, 15) zum Behälteräußeren hin gewölbt in einem gemeinsamen Rahmen (7) angeordnet ist.

7. Behälter nach einem der vorangehenden Ansprüche, dadurch gekennzeichnet, daß wenigstens eine Behälterseitenfläche (3,5) von einer Mehrzahl von Fahrzeugscheiben (8-11, 13-14) gebildet ist.

8. Behälter nach einem der vorangehenden Ansprüche, dadurch gekennzeichnet, daß auch der Behälterboden (2) aus einer Fahrzeugscheibe gebildet ist.

9. Behälter nach einem der vorangehenden Ansprüche, dadurch gekennzeichnet, daß der Behälter (1) mit einer Abdeckung versehen ist, die selbst wiederum aus wenigstens einer Fahrzeugscheibe gebildet ist.

0060515

Europäisches
Patentamt

**EUROPÄISCHER RECHERCHENBERICHT**

0060515

Nummer der Anmeldung

EP 82 10 1935.3

| Kategorie | **EINSCHLÄGIGE DOKUMENTE** | | KLASSIFIKATION DER ANMELDUNG (Int. Cl.³) |
|---|---|---|---|
| | Kennzeichnung des Dokuments mit Angabe, soweit erforderlich, der maßgeblichen Teile | betrifft Anspruch | |
| A | DE – A1 – 2 903 103 (TETRA WERKE U. BAENSCH GMBH) -- | | A 01 K 63/00 |
| A | US – A – 2 016 439 (C.H. HOGAN) ---- | | |

**RECHERCHIERTE SACHGEBIETE (Int. Cl.³)**

A 01 G 1/00

A 01 G 9/00

A 01 K 63/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 13-05-1982 | SCHOFER |

EPA form 1503.1 06.78